# EUROPEAN PATENT APPLICATION

(11) **EP 1 986 299 A1**
(43) Date of publication of application: **29.10.2008**
(21) Application number: 08154822.4
(22) Date of filing: 18.04.2008
(51) Int. Cl.: H02G 3/12, H02G 3/08

(54) **Box for electric wirings in floors and walls**

(30) Priority: 25.04.2007 NL 1033749
(71) Applicant: ABB B.V., 6716 AA Ede (NL)
(72) Inventor: Witte, Adriaan Marinus, 3436 HT, NIEUWEGEIN (NL)
(74) Representative: De Hoop, Eric

(57) **Abstract**

Box for electric wirings, particularly a distribution junction box, comprising a circumferential wall defining a cavity for electric connections, which cavity at a first mounting side via a primary opening can be accessible for arranging the connections, wherein the box is provided with a number of secondary openings for connection to one or more installation pipes for passing the wires through to the cavity, wherein at least some of the primary and secondary openings are covered by one or more sheets of flexible puncturable material separately attached thereto.

## Description

### BACKGROUND OF THE INVENTION

The invention relates to a box for electric wirings in (ceiling) floors.

An example of such a box is a distribution junction box provided with a cavity, which box at an end situated below once having been placed, forms an opening for access for installation activities from the lower side of the floor, such as arranging wire connections in the cavity, and which is provided with a number of spouts which once having been placed are accessible from the upper side of the floor for connection of one or more installation pipes intended for passing the wires through to the cavity.

At the edge the large opening is usually provided with metal nut members for bolts for attaching electric components.

Such distribution junction boxes are usually placed in concrete floors. They may consist of prefab elements, such as in particular so-called hollow core slabs.

In case of prefabrication the distribution junction box can be placed in the hollow core slab, to which end a hole is left open in the concrete when the concrete is still soft and the box is placed in said hole. The space between the hole and the box is subsequently filled with concrete. Alternatively the box is not placed in the construction project until after the hollow core slab has been placed, to which end the electrician has a hole drilled at the wanted location. After the box has been placed in the hole, the hole is buttered/filled with mortar.

It is desirable that it is prevented that concrete water ends up in the box when concrete is applied around the box.

In both cases a concrete cover layer is poured on the upper side or rough side of the hollow core slab floor after connection of the wanted installation pipes onto the spouts and other facilities have been placed. Also in such cases it is undesirable that concrete water penetrates the box.

To prevent penetration of concrete water in the box the box, was previously enveloped in a plastic bag, which could at least partially be removed by the electrician, once the concrete had hardened. The bag, however, was highly rupture prone. Moreover its use was laborious.

An improvement was sought in the use of lids for the bottom opening and the use of partitions between the spouts and the cavity of the box. During installation the electrician had to forcefully puncture the wanted partitions using a screwdriver, which is difficult and laborious. Moreover concrete (water) could enter the spouts.

### SUMMARY OF THE INVENTION

It is an object of the invention to provide a box of the type mentioned in the preamble, which can reliably be kept free from concrete (water).

It is an object of the invention to provide a box of the type mentioned in the preamble, which can easily be kept free from concrete (water).

It is an object of the invention to provide a box of the type mentioned in the preamble, which can easily be adjusted by the electrician to the wanted connections.

According to one aspect the invention provides a box for electric wirings, particularly a flush junction box, particularly a distribution junction box, comprising a circumferential wall defining a cavity for electric connections, which cavity at a first mounting side via a primary opening can be accessible for arranging the connections, wherein the box is provided with a number of secondary openings for connection to one or more installation pipes for passing the wires through to the cavity, wherein at least some of the primary and secondary openings are covered by one or more sheets of flexible puncturable material separately attached thereto. The sheet or sheets can easily be arranged, after manufacturing the box of the usual synthetic material, after which the protection against concrete water is a fact. At the wanted moment the electrician can easily puncture the sheet/sheets.

In one embodiment the primary opening is covered by one or more sheets of flexible, puncturable material attached thereto. In this way the said nut members can be protected from concrete water, particularly when it regards prefab material.

In one embodiment a number of secondary openings are covered by one or more sheets of flexible, puncturable material attached thereto. The electrician can easily puncture the wanted secondary openings and connect an installation pipe. The other secondary openings remain covered.

Preferably the covered secondary openings are covered by a common sheet. In that way they can easily be covered.

In one embodiment of the box according to the invention the covered secondary openings are situated next to each other, which further simplifies the covering.

In one embodiment all secondary openings are covered by a sheet, preferably by the same sheet.

When the sheet or the sheets in their circumference has/have a geometry that substantially corresponds with the geometry of the group of secondary openings covered thereby the sheet material can be opaque and the electrician in spite of this, by following the geometry, will be able to recognise the correct place for puncturing in order to realise passages at the wanted locations.

In one embodiment that is easy to manufacture, the sheet or sheets is/are attached to a head- or end surface of the box that is situated around at least a part of the primary opening or secondary openings in question.

In a simple embodiment, in which the covering is easy to realise, the secondary openings are formed by spouts at the distal end thereof.

The spouts can be substantially oriented in the same direction, particularly facing away from the first mounting side, preferably perpendicular thereto.

Preferably the used sheet comprises dampproof material.

The used sheet can be applied by adhesion. In one embodiment the used sheet comprises a layer of cellulose-like material, preferably provided with a layer of adhesive material applied thereon.

The flexibility of the used sheet also renders it suitable for mechanical application, particularly like a kind of label, therefore when supplied supported on a continuous layer of "release paper" (silicone paper). The sheets can then consecutively be adhered like labels to consecutive boxes.

The aspects and measures described in this description and the claims of the application and/or shown in the drawings of this application may where possible also be used individually. Said individual aspects and other aspects may be the subject of divisional patent applications relating thereto. This particularly relates to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows a box according to the invention, in side view, as distribution junction box;
Figure 2A shows the box of figure 1, sideways from the upper side;
Figure 2B shows the box of figure 1, sideways from the opposite (bottom) side;
Figure 3 shows the box of figures 1, 2A and 2B, placed in a hollow core slab in a concrete plant;
Figure 4 shows the box of figures 1, 2A and 2B placed in a hollow core slab in the construction project; and
Figure 5A-C show the box of figures 1, 2A and 2B and 4 in consecutive stages of installation.

### DETAILED DESCRIPTION OF THE DRAWINGS

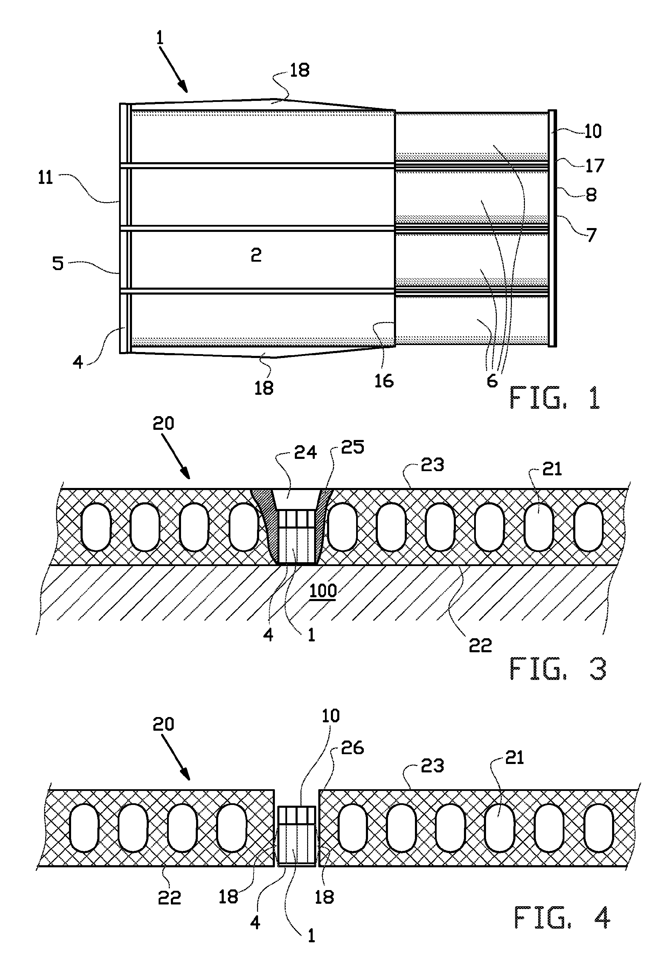

The flush junction box or distribution junction box 1 shown in figure 1 has been made by injection moulding a suitable synthetic material such as polypropene copolymer. The distribution junction box 1 is substantially cylindrical, having a portion defined by a circumferential wall 2 having a circular cross-section, surrounding a cavity 3. At the mounting side to be the circular first end edge 4 surrounds a primary opening 5. The first end edge 4 defines a first straight head- or end surface of the distribution junction box 1.

At the opposite side a number of parallel spouts 6 have been formed that are perpendicular to the opening 5, wherein at the location of the transition between the spouts 6 and the circumferential wall 2 a transverse wall 16 has been formed. At the location of the spouts 6 the transverse wall 16 is open, so that the inside of the spouts 6 is in open connection with the cavity 3. At the end facing away from the mounting side the spouts form second end edges 7, that define secondary openings 8 and are part of a second end- or transverse wall 10. The second end edges 7 and/or the end- or transverse wall 10 define a second straight head- or end surface of the distribution junction box 1. There is a recess 9 in the centre of the wall 10. At the circumferential wall 2 a number of axially and radially extending ribs 18 have been integrally formed, with which the box 1 can be clamped into a hole.

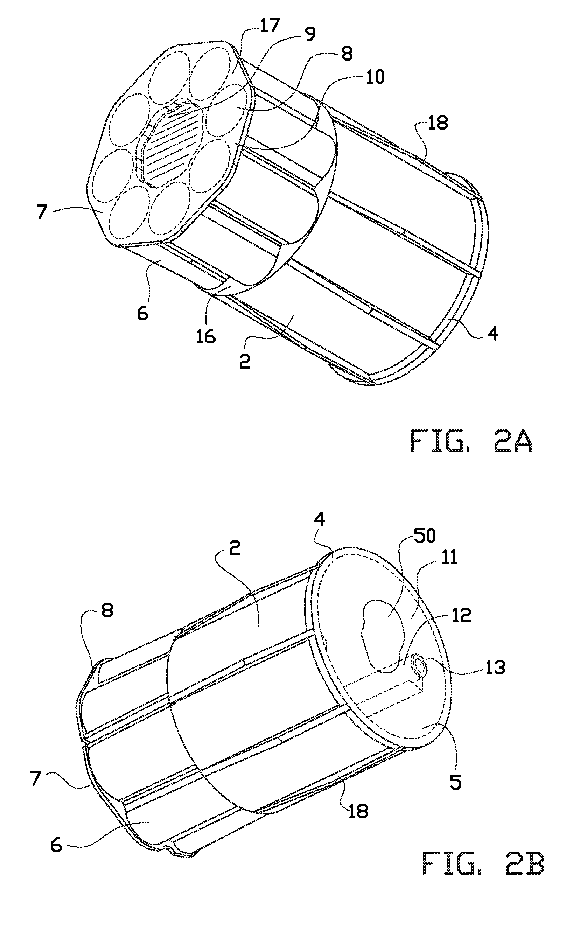

In figure 2A it can be seen that the secondary openings 8 are positioned according to a circumferential series, and thus surround the centre recess 9. The series of openings 8 also define a polygon.

Both the opening 5 and the openings 8 are covered by a sheet or leaf 11 or 17, respectively, adhered to the first edge 4 and the second edges 7/10, respectively, which sheet or leaf as regards composition can be compared to cover tape used by painters. As a result the sheet is not see-through. In an alternative embodiment of the sheet it can be see-through indeed. Because an insert point for injection moulding can be situated in the recess 9, the sheet will not be damaged. As can be seen in figure 2B an image 50 can be printed on the sheet 11, containing information about the box 1.

As can be seen in figure 2B, at the mounting side a little bush 12 is integrally formed in the cavity 3, in which cavity a nut member 13 is accommodated, in this case a bush with internal thread, in which an attachment bolt can be screwed for attaching an electric component onto the distribution junction box 1.

In case of placement beforehand in for instance a hollow core slab, as shown in figure 3, the hollow core slab 20, provided with hollow cores 21 that are perpendicular to the plane of the drawing, will have been placed with the bottom surface 22 on a mould base 100. From the side of the upper surface 23, a hole 24 is made in the not yet hardened concrete material, after which a distribution junction box 1 is placed therein, the edge 4 as much as possible on the base 100. After that the hole 24 around the distribution junction box 1 is filled with mortar 25. Because of the sheet 11 penetration of concrete water in the cavity 3, particularly near bush 13, is prevented. During applying the mortar 25 the sheet 17 prevents that mortar or concrete water enters the spouts 6. The used mortar is of such a consistency that it will not overly flow away in a hollow core 21 in the direction perpendicular to the plane of the drawing.

The hollow core slab 20 of figure 3 can afterwards be transported in groups on trailers to a certain construction project.

Hollow core slabs can also be placed in a construction project without placing distribution junction boxes in them beforehand, in which case the distribution junction boxes are not placed until after the hollow core slab has been placed in the construction project at the wanted location, if so desired adapted to the latest wishes of the users of the building to be built. A diamond head drill or something similar is used to drill a continuous hole 26 in the hollow core slab 20. Subsequently the distribution junction box 1 is inserted into the hole 26, wherein the box 1 is clamped against the hole wall by the ribs 18.

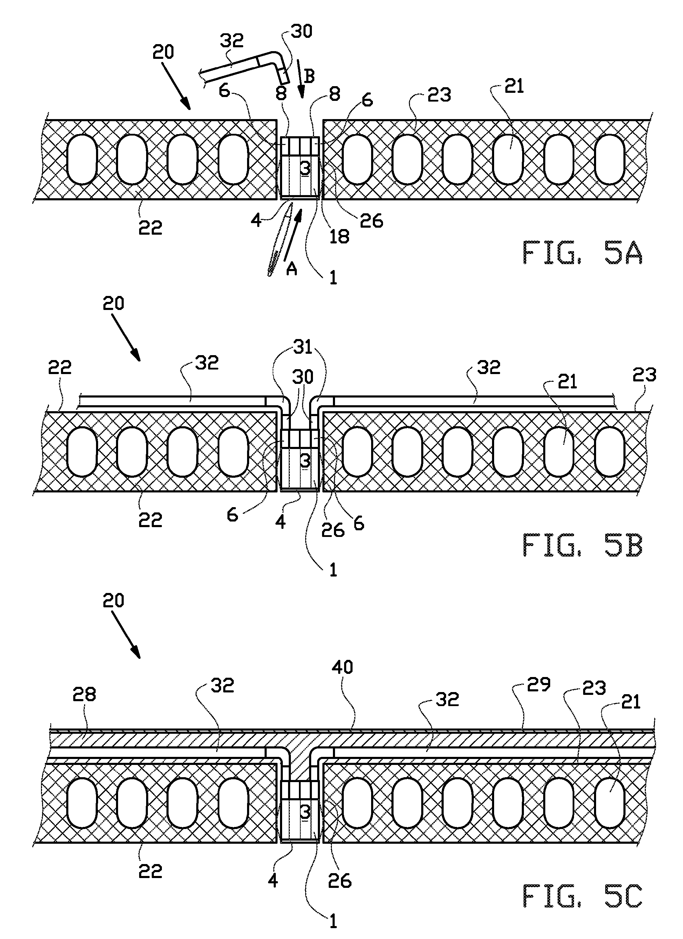

Starting from the slab 20 according to figure 4, figure 5A illustrates that the electrician is able to puncture the sheet 11 in the direction A using a ballpoint, after which the sheet can be partially pulled away, thus ending the adhesion between the sheet and the edge 4. Optionally a piece of installation pipe can be used instead of a ballpoint. At the upper side the electrician is able to perforate the part of the sheet 17 covering the opening 8 in question in the direction B, using the end 30 of an installation pipe to be connected to the box 1. The polygon shape of the series of holes 8 makes it easy for the electrician to hit the sheet at the right place.

Subsequently the electrician passes the end 30 of the (piece of) installation pipe further into the spout 6. Via bend 31 the end 30 merges into horizontal installation pipe 32, which leads to a connection point that is not further shown. After the installation activities on the rough hollow core slab 20 have been completed, the floor can be finished with a cover layer 28, which embeds the installation pipes 32. As a result of the covering 17 of the unused spouts 6, the mortar 28 does not enter the cavity 3. A further layer may be applied onto the upper surface 29 of the cover layer 28, for instance in the form of floor covering 40.

Because the space below the hollow core slab 20 is open, presence of the sheet 11 is less important here.

The used sheet 11 and/or 17 is made of a material having a suitable perforation strength and/or point impact strength and/or tensile strength and rupture tensile strength. Examples of such materials are the various polyethylenes, such as PE, LDPE, HDPE, LLDPE, polyacrylamides and polyethyleneimines, and cellulose-like materials, such as (cationogenous) starch, casein, cellulose resins and cellulose derivatives, and combinations thereof. The sheet will be sufficiently dampproof. Various polyethylvynilalcohols (PVOH) and polyvynilalcohols can optionally be used for that purpose. Different materials may also be combined into a composite sheet, for instance a layer of PE having a layer of PVOH. Further materials that can be suitably combined comprise nylon6 and nylon6,6. In general said sheets can easily be provided with an adhesive layer.

An example of a suitable material is paper tape E500 or Q477 available from Stokvis Tapes of Ablasserdam, the Netherlands. Another suitable material is available from Herald Speciaaldrukkerij of Heumen under the name of Polyetheen Extra Permanent. Also suitable is PE gloss white as sticker/label material (as sheet) having an adhesive layer R77, on a carrier roll of HD 70 white, which is available from UPM Raflatac.

The above description is included to illustrate the operation of preferred embodiments of the invention and not to limit the scope of the invention. Starting from the above explanation many variations that fall within the spirit and scope of the present invention will be evident to an expert.

## Claims

1. Box for electric wirings, particularly a distribution junction box, comprising a circumferential wall defining a cavity for electric connections, which cavity at a first mounting side via a primary opening can be accessible for arranging the connections, wherein the box is provided with a number of secondary openings for connection to one or more installation pipes for passing the wires through to the cavity, wherein at least some of the primary and secondary openings are covered by one or more sheets of flexible puncturable material separately attached thereto.

2. Box according to claim 1, wherein the primary opening is covered by one or more sheets of flexible, puncturable material attached thereto.

3. Box according to claim 1 or 2, wherein a number of secondary openings are covered by one or more sheets of flexible, puncturable material attached thereto.

4. Box according to claim 3, wherein the covered secondary openings are covered by a common sheet.

5. Box according to claim 3 or 4, wherein the covered secondary openings are situated next to each other.

6. Box according to claim 3, 4 or 5, wherein all secondary openings are covered by a sheet, preferably by the same sheet.

7. Box according to any one of the claims 3-6, wherein the sheet or the sheets in their circumference has/have a geometry that substantially corresponds with the geometry of the group of secondary openings covered thereby.

8. Box according to any one of the preceding claims, wherein the sheet or sheets is/are attached to a head- or end surface of the box that is situated around at least a part of the primary opening or secondary openings in question.

9. Box according to any one of the preceding claims, wherein the secondary openings are formed by spouts at the distal end thereof.

10. Box according to claim 9, wherein the spouts are substantially oriented in the same direction.

11. Box according to claim 10, wherein the spouts are facing away from the first mounting side, preferably perpendicular thereto.

12. Box according to any one of the preceding claims, wherein the used sheet comprises dampproof material.

13. Box according to any one of the preceding claims, wherein the used sheet is applied by adhesion.

14. Box according to claim 13, wherein the used sheet comprises a layer of cellulose-like material, preferably provided with a layer of adhesive material applied thereon.
